# DEMANDE DE BREVET EUROPEEN

(11) **EP 4 765 331 A1**
(43) Date de publication de la demande: **24.06.2026**
(21) Numéro de dépôt: 25222458.9
(22) Date de dépôt: 11.12.2025
(51) Int. Cl.: H01M 10/613, B60K 1/04, B60L 50/60, H01M 10/625, H01M 10/6567

(54) **SYSTEME DE REFROIDISSEMENT POUR BATTERIE HAUTE TENSION**

(30) Priorité: 12.12.2024 FR 2413974
(71) Demandeur: AMPERE s.a.s., 92100 Boulougne-Billancourt (FR)
(72) Inventeur: CAYER, Regis, 78280 GUYANCOURT (FR); KIM, Dahye, 78280 GUYANCOURT (FR); PAROLINI, Pascal, 78280 GUYANCOURT (FR)
(74) Mandataire: Renault Group

(57) **Abrégé**

Système de refroidissement (3) d'une batterie (2) haute tension pour véhicule automobile (1), comprenant un premier réservoir (5) de liquide diélectrique (6), un deuxième réservoir (7) de liquide diélectrique (6), une pompe de circulation (8) du liquide diélectrique (6) et un échangeur de chaleur (9) apte à réguler la température dudit système de refroidissement (3).

Le deuxième réservoir (7) est positionné dans un corps creux (10) du véhicule automobile (1) par des moyens de fixation (11) et est apte à adopter une position rétractée (PR) dans laquelle ledit deuxième réservoir (7) ne comprend pas de liquide diélectrique (6) et une position déployée (PD) dans laquelle ledit deuxième réservoir (7) comprend du liquide diélectrique (6).

## Description

### Domaine technique

La présente invention concerne de manière générale les batteries pour véhicule automobile et plus particulièrement les systèmes de refroidissement des batteries pour véhicule automobile.

Un système de refroidissement de batterie haute tension pour véhicule automobile comprend généralement une pompe de circulation, un échangeur de chaleur, un premier réservoir et un deuxième réservoir additionnel. Le réservoir additionnel permet de stocker du liquide diélectrique durant la mise en route du premier cycle de la batterie.

Une fois que le réservoir additionnel est rempli de liquide diélectrique, aucune opération de maintenance n'a besoin d'être effectuée sur ledit réservoir.

En revanche, dans certains véhicules automobiles, l'architecture du bloc de batterie à l'avant du véhicule ne permet pas d'implanter un deuxième réservoir additionnel ayant une capacité suffisante, en particulier ayant une capacité de huit litres.

Aujourd'hui, certaines innovations exploitent des volumes vides et non utilisés du véhicule automobile. Toutefois, ces innovations consistent à utiliser ces volumes pour l'installation de tuyaux.

### Exposé de l'invention

La présente invention a pour but de proposer une solution qui réponde aux problématiques précitées.

L'invention a donc pour objet un système de refroidissement d'une batterie haute tension pour véhicule automobile, comprenant un premier réservoir de liquide diélectrique, un deuxième réservoir de liquide diélectrique, une pompe de circulation du liquide diélectrique et un échangeur de chaleur apte à réguler la température dudit système de refroidissement. Le deuxième réservoir est positionné dans un corps creux du véhicule automobile par des moyens de fixation et est apte à adopter une position rétractée dans laquelle ledit deuxième réservoir ne comprend pas de liquide diélectrique et une position déployée dans laquelle ledit deuxième réservoir comprend du liquide diélectrique.

Dans un mode de réalisation, le liquide diélectrique est de l'huile de refroidissement.

Avantageusement, le deuxième réservoir comprend du plastique.

Dans un mode de réalisation, le deuxième réservoir est positionné dans l'un des longerons du véhicule automobile.

Avantageusement, les moyens de fixation du deuxième réservoir dans le corps creux comprennent une plaque d'interface.

Dans un premier mode de réalisation, les moyens de fixation du deuxième réservoir dans le corps creux comprennent un boulon.

Dans un deuxième mode de réalisation, les moyens de fixation du deuxième réservoir dans le corps creux comprennent deux boulons.

Avantageusement, le deuxième réservoir est plié lorsqu'il est en position rétractée.

Dans un mode de réalisation, le deuxième réservoir est plié en forme de serpentin lorsqu'il est en position rétractée.

Avantageusement, le deuxième réservoir est en position rétractée avant la première mise en route du véhicule automobile et est en position déployée après la première mise en route du véhicule automobile.

L'invention a aussi pour objet une batterie comprenant un système de refroidissement tel que défini ci-dessus.

L'invention a encore pour objet un véhicule comprenant un système de refroidissement tel que défini ci-dessus.

### Brève description des dessins

D'autres buts, caractéristiques et avantages de l'invention apparaîtront à la lecture de la description suivante, donnée uniquement à titre d'exemple non limitatif et faite en référence aux dessins annexés sur lesquels :
- La [Fig. 1] représente un exemple d'un véhicule automobile ;
- La [Fig. 2] est une vue en perspective d'une batterie haute tension pour véhicule automobile comprenant un exemple d'un système de refroidissement ;
- La [Fig. 3A] est une vue en coupe d'un deuxième réservoir dans une position rétractée d'un exemple d'un système de refroidissement ;
- La [Fig. 3B] est une vue en coupe d'un deuxième réservoir dans une position intermédiaire d'un exemple d'un système de refroidissement ; et
- La [Fig. 3C] est une vue en coupe d'un deuxième réservoir dans une position déployée d'un exemple d'un système de refroidissement.

### Description détaillée

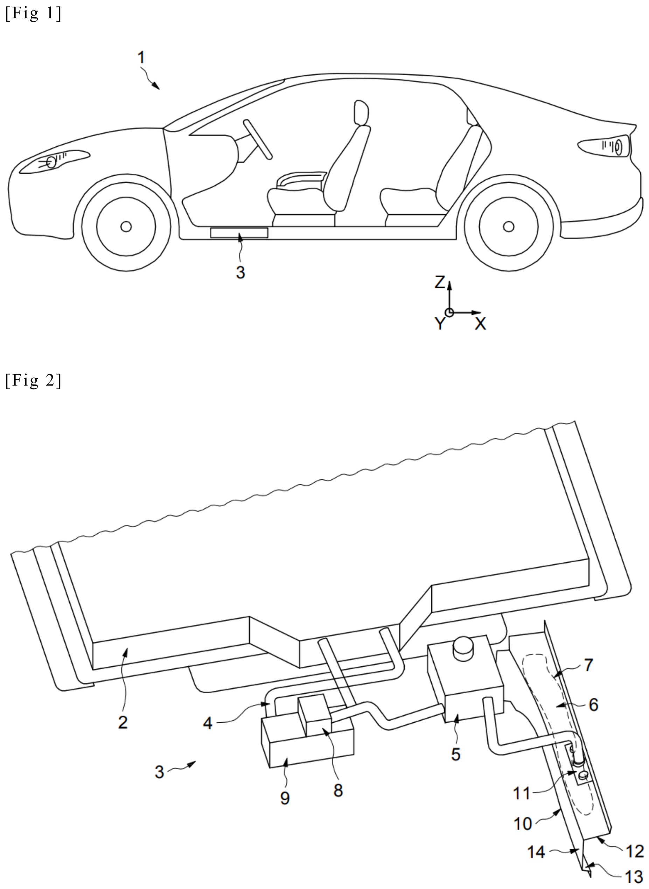

On se réfère à la figure 1 qui représente un véhicule automobile 1 dans un repère orthogonal X, Y, Z. L'axe X est parallèle à la direction longitudinale du véhicule 1 et orienté vers l'arrière du véhicule 1 en marche normale, l'axe Y est perpendiculaire à l'axe X et orienté vers la gauche du véhicule 1 observé de face, et l'axe Z est perpendiculaire au plan défini par les axes X et Y et orienté vers le toit du véhicule 1.

Le véhicule automobile 1 comprend une batterie 2 haute tension qui alimente le véhicule automobile 1 en électricité et stocke de l'énergie électrique. La batterie 2 haute tension du véhicule automobile 1 comprend un système de refroidissement 3 permettant de gérer les échanges thermiques dans la batterie 2 haute tension et d'éviter sa surchauffe.

Tel qu'illustré sur la figure 2, le système de refroidissement 3 comprend un circuit 4 entourant la batterie 2, un premier réservoir 5 de liquide diélectrique 6, un deuxième réservoir 7 de liquide diélectrique 6, une pompe de circulation 8 dudit liquide diélectrique 6 et un échangeur de chaleur 9. Les premier et deuxième réservoirs 5, 7, la pompe de circulation 8 et l'échangeur de chaleur 9 sont disposés le long du circuit 4.

Le liquide diélectrique 6 est un liquide de refroidissement comprenant des propriétés d'isolation électrique, assurant le refroidissement de la batterie 2 en traversant le circuit 4 qui entoure ladite batterie 2. Selon un mode de réalisation, le liquide diélectrique 6 est de l'huile de refroidissement.

Avantageusement, le premier réservoir 5 est un réservoir comprenant une capacité de trois litres et le deuxième réservoir 7 comprend par exemple une capacité de huit litres. Le deuxième réservoir 7 comprend avantageusement du plastique.

Les réservoirs 5, 7 permettent de stocker le liquide diélectrique 6 et d'assurer un approvisionnement dudit liquide diélectrique 6 dans le circuit 4 en cas de besoin, et permettent en outre de compenser les variations de volume lors de changements de température dans la batterie 2. En effet, lorsqu'il y a des changements de température dans la batterie 2 et en particulier dans le circuit 4 du système de refroidissement 3, le liquide diélectrique 6 se dilate et/ou se contracte, modifiant ainsi le volume qu'il occupe. Les réservoirs 5, 7, et en particulier le deuxième réservoir 7, sont notamment utiles pour compenser les variations de volume dans le système de refroidissement 3 en fonction des variations de température de la batterie 2.

L'échangeur de chaleur 9 favorise la régulation de la température du système de refroidissement 3. Lorsque la batterie 2 est utilisée, par exemple lorsque le véhicule automobile 1 est en mouvement ou lors d'une phase de recharge de ladite batterie 2, le système de refroidissement 3 propage le liquide diélectrique 6 de refroidissement dans le circuit 4 afin de refroidir la batterie 2. Lorsque le liquide diélectrique 6 circule autour de la batterie 2, il absorbe la chaleur produite par ladite batterie 2. Le liquide diélectrique 6 traverse ensuite l'échangeur de chaleur 9 qui récupère la chaleur dudit liquide 6 de refroidissement et la transfère vers l'air extérieur ou vers un système annexe. Lorsque le liquide diélectrique 6 ressort de l'échangeur de chaleur 9, il est refroidi et est à nouveau injecté dans le circuit 4 autour de la batterie 2.

La pompe de circulation 8 du système de refroidissement 3 assure la circulation du liquide diélectrique 6 de refroidissement à travers toutes les sections du circuit 4 autour de la batterie 2.

Le deuxième réservoir 7 est positionné dans un corps creux 10 du véhicule automobile 1 par des moyens de fixation 11. Dans le mode de réalisation illustré sur les figures, le corps creux 10 dans lequel est positionné le deuxième réservoir 7 est un des longerons du véhicule automobile 1.

Le longeron 10 comprend sensiblement une surface supérieure 12, une surface inférieure 13 et des surfaces latérales 14. Le deuxième réservoir 7 est positionné à l'intérieur du longeron 10, entre les surfaces supérieure 12, inférieure 13 et latérales 14 dudit longeron 10.

Les moyens de fixation 11 dudit deuxième réservoir 7 dans le longeron 10 comprennent une plaque d'interface 15 positionnée horizontalement sur le longeron 10 et deux boulons 16. La plaque d'interface 15 est fixée sur la surface supérieure 12 du longeron 10 à l'aide des boulons 16. La surface supérieure 12 et la plaque d'interface 15 sont percées de manière que le deuxième réservoir 7 puisse être inséré à l'intérieur dudit longeron 10.

La plaque d'interface 15 est apte à renforcer la zone percée de la surface supérieure 12 du longeron 10.

Le deuxième réservoir 7 comprend un corps flexible 17 et un connecteur de remplissage 18.

Lorsque le deuxième réservoir 7 est inséré dans le longeron 10, le connecteur de remplissage 18 dudit réservoir 7 repose sur la plaque d'interface 15. Le connecteur de remplissage 18 du deuxième réservoir 7 est destiné à être raccordé à un tuyau du circuit 4 du système de refroidissement 3 entourant la batterie 2. Lorsque le deuxième réservoir 7 est positionné dans le longeron 10, le connecteur de remplissage 18 est ainsi accessible depuis l'extérieur dudit longeron 10.

Une fois que le deuxième réservoir 7 est positionné dans le longeron 10, que la plaque d'interface 15 est fixée sur la surface supérieure 12 du longeron 10 et que le connecteur de remplissage 18 est relié au circuit du système de refroidissement 3, le premier cyclage de la batterie 2 peut être effectué consistant à charger et décharger la batterie 2 pour la première fois durant son cycle de vie. Cette étape permet notamment de stabiliser les composants électrochimiques de la batterie 2 et peut être effectuée avant, pendant ou après la livraison du véhicule automobile 1 à l'utilisateur.

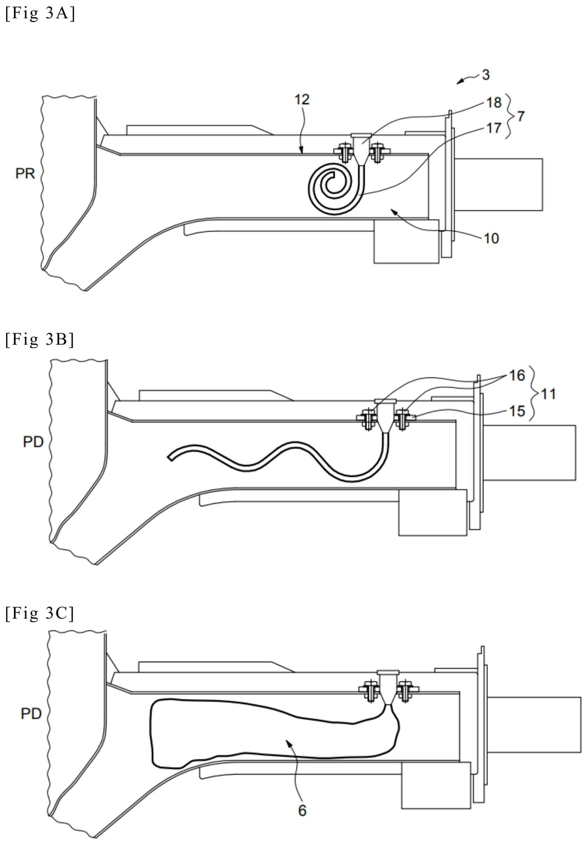

Le corps flexible 17 du réservoir 7 comprend du plastique souple et est apte à accueillir le liquide diélectrique 6. En effet tel qu'illustré sur les figures 3A, 3B et 3C, le deuxième réservoir 7 est apte à adopter une position rétractée PR dans laquelle ledit deuxième réservoir 7 ne comprend pas de liquide diélectrique 6 et une position déployée PD dans laquelle ledit deuxième réservoir 7 comprend du liquide diélectrique 6. Plus particulièrement, le corps flexible 17 du deuxième réservoir 7 est apte à adopter une position rétractée PR dans laquelle ledit corps flexibles 17 ne comprend pas de liquide diélectrique 6 et une position déployée PD dans laquelle ledit corps flexible 17 comprend du liquide diélectrique 6.

Selon le mode de réalisation illustré sur les figures, le corps flexible 17 du deuxième réservoir 7 est plié lorsqu'il est en position rétractée PR, c'est-à-dire lorsqu'il est vide et ne comprend pas de liquide diélectrique 6. La position rétractée du corps flexible 17 permet au deuxième réservoir 7 d'être compacté en un volume restreint afin de faciliter l'insertion du corps flexible 17 dans le longeron 10 et en particulier de faciliter le passage du corps flexible 17 à travers les perçages de la surface supérieure 12 du longeron et de la plaque d'interface 15.

La figure 3A illustre l'état du deuxième réservoir 7 après insertion dans le longeron et avant la mise en route du premier cyclage de la batterie 2. Le corps flexible 17 du deuxième réservoir 7 est en position rétractée PR.

La figure 3B illustre l'état du deuxième réservoir 7 pendant la mise en route du premier cyclage de la batterie 2. Le corps flexible 17 du deuxième réservoir 7 commence à être rempli de liquide diélectrique 6. Le corps flexible 17 du réservoir 7 est déplié petit à petit jusqu'à être en position déployée PD.

Finalement, la figure 3C illustre l'état du deuxième réservoir 7 après la mise en route du premier cyclage de la batterie 2. Le corps flexible 17 du deuxième réservoir 7 est ainsi en position déployée PD et est rempli de liquide diélectrique 6.

En position rétractée, le corps flexible 17 du deuxième réservoir 7 est ainsi plié de façon astucieuse, c'est-à-dire que le pliage du corps flexible 17 est intelligemment étudié de manière que le réservoir 7 soit facile à insérer dans le longeron 10 et qu'il puisse être déplié facilement lors du remplissage dudit deuxième réservoir 7 par le liquide diélectrique 6.

En particulier, le corps flexible 17 est plié en forme de serpentin lorsqu'il est en position rétractée PR, tel qu'il est illustré sur la figure 3A.

Le deuxième réservoir 7 et en particulier le corps flexible 17 dudit réservoir 7 est en position rétractée PR avant la première mise en route du véhicule automobile 1, c'est-à-dire avant le premier cyclage de la batterie 2 tel qu'illustré sur la figure 3A, et est en position déployée PD après la première mise en route du véhicule automobile 1, c'est-à-dire après le premier cyclage de la batterie 2 tel qu'illustré sur les figures 3B et 3C.

Bien entendu, on ne sort pas du cadre de l'invention lorsque le système de refroidissement 3 présente une composition différente. Il est ainsi possible de concevoir un système de refroidissement 3 dans lequel le deuxième réservoir 7 est inséré dans le longeron 10 par l'intermédiaire d'un perçage dans la surface inférieure 13 dudit longeron 10 ou de perçage dans l'une des surface latérales 14 dudit longeron 10. Le deuxième réservoir peut aussi être inséré dans un autre corps creux du véhicule automobile 1.

Finalement, la disposition du deuxième réservoir 7 dans le longeron 10 du véhicule automobile 1 et plus généralement dans un corps creux du véhicule automobile 1 permet d'optimiser l'espace au niveau de la batterie 2 et du système de refroidissement 3 tout en utilisant un espace vide et non utilisé habituellement. Par ailleurs, le deuxième réservoir 7 reste accessible s'il y a des besoins de maintenance.

## Revendications

1. Système de refroidissement (3) d'une batterie (2) haute tension pour véhicule automobile (1), comprenant un premier réservoir (5) de liquide diélectrique (6), un deuxième réservoir (7) de liquide diélectrique (6), une pompe de circulation (8) du liquide diélectrique (6) et un échangeur de chaleur (9) apte à réguler la température dudit système de refroidissement (3), **caractérisé en ce que** le deuxième réservoir (7) est positionné dans un corps creux (10) du véhicule automobile (1) par des moyens de fixation (11) et est apte à adopter une position rétractée (PR) dans laquelle ledit deuxième réservoir (7) ne comprend pas de liquide diélectrique (6) et une position déployée (PD) dans laquelle ledit deuxième réservoir (7) comprend du liquide diélectrique (6).

2. Système de refroidissement (3) selon la revendication 1, dans lequel le deuxième réservoir (7) comprend du plastique.

3. Système de refroidissement (3) selon l'une des revendications 1 et 2, dans lequel le deuxième réservoir (7) est positionné dans l'un des longerons du véhicule automobile (1).

4. Système de refroidissement (3) selon l'une quelconque des revendications 1 à 3, dans lequel les moyens de fixation (11) du deuxième réservoir (7) dans le corps creux (10) comprennent une plaque d'interface (15).

5. Système de refroidissement (3) selon l'une quelconque des revendications 1 à 4, dans lequel les moyens de fixation (11) du deuxième réservoir (7) dans le corps creux (10) comprennent un boulon (16).

6. Système de refroidissement (3) selon l'une quelconque des revendications 1 à 5, dans lequel le deuxième réservoir (7) est plié lorsqu'il est en position rétractée (PR).

7. Système de refroidissement (3) selon l'une quelconque des revendications 1 à 6, dans lequel le deuxième réservoir (7) est plié en forme de serpentin lorsqu'il est en position rétractée (PR).

8. Système de refroidissement (3) selon l'une quelconque des revendications 1 à 7, dans lequel le deuxième réservoir (7) est en position rétractée (PR) avant la première mise en route du véhicule automobile (1) et est en position déployée (PD) après la première mise en route du véhicule automobile (1).

9. Batterie (2) comprenant un système de refroidissement (3) selon l'une quelconque des revendications 1 à 8.

10. Véhicule automobile comprenant un système de refroidissement (3) selon l'une quelconque des revendications 1 à 8.
